# EUROPEAN PATENT APPLICATION

(11) **EP 2 947 930 A1**
(43) Date of publication of application: **25.11.2015**
(21) Application number: 13871994.3
(22) Date of filing: 17.01.2013
(51) Int. Cl.: H04W 52/36

(54) **POWER HEADROOM REPORTING METHOD AND DEVICE**

(71) Applicant: Fujitsu Limited, Kawasaki-shi, Kanagawa 211-8588 (JP)
(72) Inventor: LU, Yanling, Beijing 100025 (CN); XU, Haibo, Beijing 100025 (CN)
(74) Representative: Wilding, Frances Ward
(86) International application number: PCT/CN2013/070579
(87) International publication number: WO 2014/110747

(57) **Abstract**

Embodiments of the present disclosure provide a method and apparatus for reporting power headroom. The method includes: transmitting a power headroom report message by UE to an eNB when a report condition of PH is satisfied, related information in the power headroom report message which corresponds to a carrier multiplexed with a D2D link including a PH value of the D2D link and a PH value of a cellular link; wherein an order of the PH value of the D2D link and the PH value of the cellular link in the power headroom report message is predefined according to system configuration. With the method and apparatus of the embodiments, the UE may accurately and/or punctually report power headroom of the D2D link to the eNB. Therefore, the eNB may schedule the resources of the D2D link and the cellular link more flexibly and effectively.

## Description

### Technical Field

The present disclosure relates to the field of communications, and in particular to a new Power Headroom Report (PHR) in a Device to Device (D2D) communication scheme.

### Background

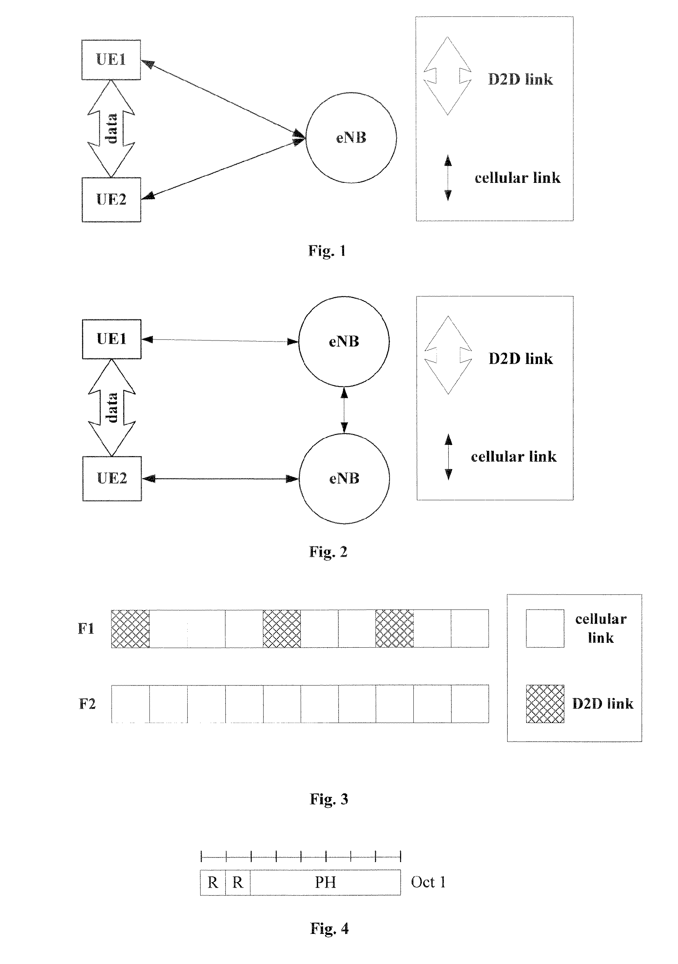

In an existing cellular wireless communication system, when a user equipment (UE) communicates with another UE at other side, wherever the other UE is located, the UE needs to transmit data to be transmitted to the other UE to an eNB, and then after passing a core network, the data are transmitted by an eNB serving for the other UE to the other UE; on the contrary, data transmitted by the other UE are also transmitted via an "eNB-core network-eNB" path, and finally received by the UE via an air interface. Thus, a case will occur where two UEs exchanging data are in proximity with each other, such as in neighboring eNBs or in the same eNB, but as being limited by the existing communication scheme, the data exchanged between them are still exchange in the "eNB-core network-eNB" manner. Obviously, in a case where two UEs at opposite ends are in close proximity with each other, such a manner of exchange not only increases the burden of the core network, but also consumes more energies of the UE, as in such a case, a distance between UE and the eNB often exceeds that between two UEs, and the UE needs more energies to transmit data. Hence, in such a case, two UEs in close proximity with each other may employ a D2D communication scheme, that is, transmission and reception of data are performed directly via a D2D link between the two UEs, as shown in Figures 1 and 2, wherein, Figure 1 shows that UEs at the two ends of a D2D link are in the coverage of the same eNB, and Figure 2 shows that UEs at the two ends of a D2D link are in the coverage of different eNBs neighboring each other.

Currently, when the D2D communication scheme is used, the D2D link may use an independent frequency, and may also be multiplexed in an uplink carrier in an LTE-A system together with a cellular link, as shown in Figure 3. In Figure 3, the uplink carrier of the LTE-A is F1, a downlink carrier is F2, and the cellular link and the D2D link are multiplexed in F1 in time division manner. And the D2D link and the cellular link are multiplexed in the uplink carrier of the LTE-A, and scheduling of the D2D link is still controlled by the eNB, thereby resource waste may be lowered and interference may be reduced.

On the other hand, in the LTE-A system, as resource scheduling of an uplink and a downlink is controlled by an eNB, in order to better schedule the resources, the eNB needs the UE to report a channel condition of a link, such as reporting such information as a channel quality indicator (CQI), etc. In this way, the eNB may allocate a proper modulation coding level for the UE. And at the same time, the eNB needs to control transmission power of the UE, so as to better overcome the near-far-effect of the UE and control that the transmission power of the UE to be not exceeded than its maximum transmission power. Hence, the UE needs to report a power headroom (PH) value to the eNB, this process being referred to as power headroom report (PHR). And at the same time, the PHR may also be referenced by the eNB in allocating uplink resources and selecting a modulation coding level for the UE on the uplink. Therefore it can be seen that the PHR is obviously meaningful for reference to the eNB in scheduling resources.

In the D2D communication scheme, as D2D link resources are also controlled by the eNB, it can be foreseen that in the D2D communication scheme, the PHR is still very useful scheduling reference information to the eNB, that is, the PH value of the D2D link needs also to be reported to the eNB.

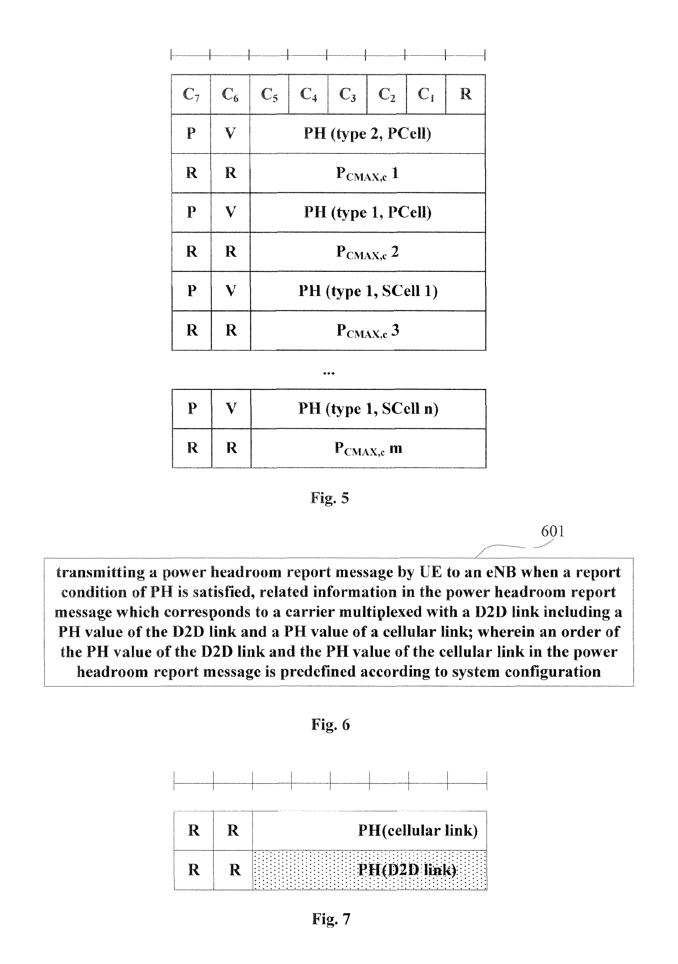

In a PHR process in the LTE-A system, the PH value is contained in a power headroom MAC control element (PH MAC CE) for being reported to an eNB by UE, in which PH values of the UE in each activated carrier are contained. If an uplink has only one carrier, a PH value of the unique uplink carrier is contained, which may be configured according to the system, and in the PH MAC CE format shown in Figure 4 or 5. If the uplink has multiple carriers, the expanded PH MAC CE format shown in Figure 5 may be used.

In particular, in Figure 4, the PH value is a PH value to which the unique uplink carrier corresponds, which is of a type 1, and is a real value, wherein, R is a reserved bit. And in Figure 5, a definition and explanation of its control element are as follows:
Ci: in a first byte of the control element, a Ci position corresponds to a secondary cell defined by the system (that is, each Ci corresponds to a secondary cell one by one), and its value denotes whether a PH value of a cellular link of the secondary cell to which it corresponds exists. When its value is "1", it shows that the PH value of the corresponding secondary cell will occur; and when its value is "0", it shows that the PH value of the corresponding secondary cell will not occur. And at the same time, an occurrence order of PH values of cellular links of different secondary cells is identical to an occurrence order of Cis to which the secondary cells correspond. For a primary cell (PCell), its PH value certainly occurs, and occurs earliest. The primary cell has two types of PH values, type 1 and type 2. The PH value of type 1 of the primary cell certainly occurs, and whether the PH value of type 2 occurs is configured by a high layer of the system. Only one type PH value of the secondary cell (SCell) will occur, that is, a PH value of type 1. And if the uplink has only one carrier, only a PH value of a cellular link of the primary cell will occur in a PH MAC CE.
V bit: it may be used to indicate whether a corresponding PH value is a real PH value or a virtual PH value. For example, V=1 denotes that the corresponding PH value is real, and V=0 denotes that the corresponding PH value is virtual. And at the same time, it is also used to indicate whether a corresponding P_{CMAx,c} will occur; wherein V=1 denotes that a P_{CMAX,c} will occur, that is, the UE reports the P_{CMAX,c} only when the corresponding PH value is a real value, and V=0 denotes that a P_{CMAX,c} will not occur, that is, the UE does not report the P_{CMAx,c} when the corresponding PH value is virtual.
P_{CMAX,c}: if it occurs, it indicates a related parameter used by the UE side in calculating a PH value.
P bit: it is used to indicate whether the UE uses power back-off due to power management. Assuming that there exists no power back-off due to use of power management, the value of the corresponding P_{CMAX,c} will be different, and at this moment, the UE should set the P bit as 1.
R bit: a reserved bit.

It was found by the inventors in the implementation of the present disclosure that in the PHR process of the D2D communication scheme, if the original PH MAC CE format in the LTE-A system is still followed, there is only one link PH value corresponding to each carrier, that is, there is only the PH value of the cellular link; and if the D2D link and the cellular link are dynamically multiplexed in an uplink carrier of the LTE-A system, following problems will occur:
1. if an eNB needs UE to report PH values (for example, one real value, and one virtual value) of a D2D link and a cellular link in an uplink carrier at the same time in one PHR, it is not supported by the original format; and
2. if an eNB needs UE to report only one PH value for each uplink carrier in one PHR, as a PDCCH allocating resources in a downlink will be lost in some cases (such as the UE does not receive correctly), some cases that cannot be foreseen by the eNB will be resulted; for example, the UE should transmit data in a D2D link of a current TTI, but actually it does not transmit, or it should not transmit data in a D2D link, but actually it does. At this moment, it is possible that the eNB does not know whether the PH value reported by the UE is a PH value of the D2D link or a PH value of the cellular link. And only after it is determined that the PH value is a PH value of a certain link, can the eNB correctly judge an accurate type of the PH value according to the V bit in the existing format.

Furthermore, there are many triggering conditions for the PHR, such as periodic triggering and event triggering. The periodic triggering can ensure that it would not happen that an eNB does not receive the PHR in long period of time, and the event triggering ensures that the eNB can obtain the PHR punctually when certain events seriously affecting eNB scheduling occur, without needing to obtain the PHR only after the current period in the periodic triggering is completed. Following four cases exist in the event triggering condition:
1. if a prohibit PHR timer expires or has expired, and after last transmission of PHR, when UE has an uplink resource for transmitting new data, at least one pathloss of an activated serving cell for pathloss reference changes and exceeds a certain threshold value, the PHR will be triggered;
2. when a high layer configures or reconfigures a PHR function, and the configuration or reconfiguration is not used to remove the PHR function, the PHR will be triggered;
3. when a secondary cell configured with an uplink is activated, the PHR will be triggered; and
4. if a prohibit PHR timer expires or has expired, the PHR will be triggered when UE has an uplink resource for transmitting new data and for any activated serving cell configured with an uplink, the following condition is true at the current TTI (transmission time interval): there exists an uplink resource for transmission or there exists PUCCH (physical uplink control channel) transmission in the current cell, and after PHR transmission for the last time when there exists an uplink resource for transmission or there exists PUCCH transmission in this cell, power back-off of the current cell due to power management has changed and exceeds a certain threshold.

In the implementation of the present disclosure, the inventors found that in the above four time triggering conditions, the change of the pathloss of the serving cell for pathloss reference is mainly taken into account in triggering condition 1. It should be noted that the serving cell here refers to a cellular link. While in the D2D communication scheme, the pathloss reference is the cellular link no longer, and it should be a reference signal in the D2D link, with its characteristic being possibly different from that of the pathloss reference signal of the cellular link; furthermore, it is obvious that the length of the D2D link is near relative to the cellular link, and the same distance of a change of its link length has more effect on the pathloss than that of the cellular link. Therefore, in order to reflect a change of pathloss of the D2D link, following the triggering condition in the triggering conditions 1 will be less suitable, and new triggering conditions are needed to be defined.

### Reference documents:

Non-patent document 1: 3GPP TS 36.331 V11.1.0 (2012-09) Radio Resource Control (RRC) specification (Release 11); and
Non-patent document 2: 3GPP TS 36.321 V11.0.0(2012-09). Medium Access Control (MAC) protocol specification (Release 11).

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

An object of the embodiments of the present disclosure is to provide a method and apparatus for reporting power headroom, so that UE may report power headroom of a D2D link to an eNB accurately and/or punctually.

According to a first aspect of the embodiments of the present disclosure, there is provided a method for reporting power headroom, including:
transmitting a power headroom report message by UE to an eNB when a report condition of PH is satisfied, related information in the power headroom report message which corresponds to a carrier multiplexed with a D2D link including a PH value of the D2D link and a PH value of a cellular link; wherein an order of the PH value of the D2D link and the PH value of the cellular link in the power headroom report message is predefined according to system configuration.

According to a second aspect of the embodiments of the present disclosure, there is provided a method for reporting power headroom, including:
transmitting a power headroom report message by UE to an eNB when a report condition of PH is satisfied, related information in the power headroom report message which corresponds to a carrier multiplexed with a D2D link including a PH value of the D2D link, a PH value of a cellular link and PH value indication information; wherein the PH value indication information is used to indicate whether the PH value to which it corresponds is the PH value of the D2D link or the PH value of the cellular link.

According to a third aspect of the embodiments of the present disclosure, there is provided a method for reporting power headroom, including:
transmitting a power headroom report message by UE to an eNB when a report condition of PH is satisfied, related information in the power headroom report message which corresponds to a carrier multiplexed with a D2D link including a PH value of the D2D link or a PH value of a cellular link, and PH value indication information; wherein the PH value indication information is used to indicate whether the PH value to which it corresponds is the PH value of the D2D link or the PH value of the cellular link.

According to a fourth aspect of the embodiments of the present disclosure, there is provided a method for determining power headroom, including:
receiving, by an eNB, a power headroom report message transmitted by UE, related information in the power headroom report message which corresponds to a carrier multiplexed with a D2D link including a PH value of the D2D link and a PH value of a cellular link; and
determining, by the eNB, whether all the received PH values are the PH value of the D2D link or the PH value of the cellular link, according to an order of the PH value of the D2D link and the PH value of the cellular link in the power headroom report message predefined according to system configuration.

According to a fifth aspect of the embodiments of the present disclosure, there is provided a method for determining power headroom, including:
receiving, by an eNB, a power headroom report message transmitted by UE, related information in the power headroom report message which corresponds to a carrier multiplexed with a D2D link including a PH value of the D2D link, a PH value of a cellular link and PH value indication information; and
determining, by the eNB, whether the PH value to which the PH value indication information corresponds is the PH value of the D2D link or the PH value of the cellular link, according to the PH value indication information, and further determining whether all the received PH values are the PH value of the D2D link or the PH value of the cellular link.

According to a sixth aspect of the embodiments of the present disclosure, there is provided a method for determining power headroom, including:
receiving, by an eNB, a power headroom report message transmitted by UE, related information in the power headroom report message which corresponds to a carrier multiplexed with a D2D link including a PH value of the D2D link or a PH value of a cellular link, and a PH value indication information; and
determining, by the eNB, whether the PH value to which the PH value indication information corresponds is the PH value of the D2D link or the PH value of the cellular link, according to the PH value indication information.

According to a seventh aspect of the embodiments of the present disclosure, there is provided user equipment, including:
a transmitting unit configured to transmit a power headroom report message to an eNB when a report condition of PH is satisfied, related information in the power headroom report message which corresponds to a carrier multiplexed with a D2D link including a PH value of the D2D link and a PH value of a cellular link; wherein an order of the PH value of the D2D link and the PH value of the cellular link in the power headroom report message is predefined according to system configuration.

According to an eighth aspect of the embodiments of the present disclosure, there is provided user equipment, including:
a transmitting unit configured to transmit a power headroom report message to an eNB when a report condition of PH is satisfied, related information in the power headroom report message which corresponds to a carrier multiplexed with a D2D link including a PH value of the D2D link, a PH value of a cellular link and PH value indication information, wherein the PH value indication information is used to indicate whether the PH value to which it corresponds is the PH value of the D2D link or the PH value of the cellular link.

According to a ninth aspect of the embodiments of the present disclosure, there is provided user equipment, including:
a transmitting unit configured to transmit a power headroom report message to an eNB when a report condition of PH is satisfied, related information in the power headroom report message which corresponds to a carrier multiplexed with a D2D link including a PH value of the D2D link or a PH value of a cellular link, and PH value indication information, wherein the PH value indication information is used to indicate whether the PH value to which it corresponds is the PH value of the D2D link or the PH value of the cellular link.

According to a tenth aspect of the embodiments of the present disclosure, there is provided an eNB, including:
a receiving unit configured to receive a power headroom report message transmitted by UE, related information in the power headroom report message which corresponds to a carrier multiplexed with a D2D link including a PH value of the D2D link and a PH value of a cellular link; and
a determining unit configured to determine whether all the received PH values are the PH value of the D2D link or the PH value of the cellular link, according to an order of the PH value of the D2D link and the PH value of the cellular link in the power headroom report message predefined according to system configuration.

According to an eleventh aspect of the embodiments of the present disclosure, there is provided an eNB, including:
a receiving unit configured to receive a power headroom report message transmitted by UE, related information in the power headroom report message which corresponds to a carrier multiplexed with a D2D link including a PH value of the D2D link, a PH value of a cellular link and PH value indication information; and
a determining unit configured to determine whether the PH value to which the PH value indication information corresponds is the PH value of the D2D link or the PH value of the cellular link, according to the PH value indication information, and further determine whether all the received PH values are the PH value of the D2D link or the PH value of the cellular link.

According to a twelfth aspect of the embodiments of the present disclosure, there is provided an eNB, including:
a receiving unit configured to receive a power headroom report message transmitted by UE, related information in the power headroom report message which corresponds to a carrier multiplexed with a D2D link including a PH value of the D2D link or a PH value of a cellular link, and PH value indication information; and
a determining unit configured to determine whether the PH value to which the PH value indication information corresponds is the PH value of the D2D link or the PH value of the cellular link, according to the PH value indication information.

According to a thirteenth aspect of the embodiments of the present disclosure, there is provided a communication system, including the UE as described in the seventh aspect and the eNB as described in the tenth aspect, or including the UE as described in the eighth aspect and the eNB as described in the eleventh aspect, or including the UE as described in the ninth aspect and the eNB as described in the twelfth aspect.

According to another aspect of the embodiments of the present disclosure, there is provided a computer-readable program, wherein when the program is executed in an eNB, the program enables a computer to carry out the method for determining power headroom as described in any one of the fourth, fifth and sixth aspects in the eNB.

According to a further aspect of the embodiments of the present disclosure, there is provided a storage medium in which a computer-readable program is stored, wherein the computer-readable program enables a computer to carry out the method for determining power headroom as described in any one of the fourth, fifth and sixth aspects in an eNB.

According to still another aspect of the embodiments of the present disclosure, there is provided a computer-readable program, wherein when the program is executed in terminal equipment, the program enables a computer to carry out the method for reporting power headroom as described in any one of the first, second and third aspects in the terminal equipment.

According to yet another aspect of the embodiments of the present disclosure, there is provided a storage medium in which a computer-readable program is stored, wherein the computer-readable program enables a computer to carry out the method for reporting power headroom as described in any one of the first, second and third aspects in terminal equipment.

An advantage of the embodiments of the present disclosure exists in that with the method and apparatus of the embodiments, the UE may accurately and/or punctually report power headroom of the D2D link to the eNB. Therefore, the eNB may schedule the resources of the D2D link and the cellular link more flexibly.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment. In the drawings:
Figure 1 is a schematic diagram of D2D communication where terminal equipments are in coverage of the same eNB;
Figure 2 is a schematic diagram of D2D communication where terminal equipments are in coverage of different eNBs;
Figure 3 is a schematic diagram of a cellular link being multiplexed with a D2D link;
Figure 4 is a schematic diagram of a structure of a power headroom MAC control element;
Figure 5 is a schematic diagram of a structure of an expanded power headroom MAC control element;
Figure 6 is a flowchart of a method for reporting a PH value of Embodiment 1 of the present disclosure;
Figure 7 is a schematic diagram of a structure of the PH MAC CE when the uplink in the embodiment of Fig. 6 has only one carrier;
Figure 8 is a schematic diagram of a structure of the PH MAC CE when the uplink in the embodiment of Fig. 6 has at least one carrier and the D2D link is multiplexed in an uplink carrier of a primary cell;
Figure 9 is a schematic diagram of a structure of the PH MAC CE when the uplink in the embodiment of Fig. 6 has at least one carrier and the D2D link is multiplexed in an uplink carrier of a primary cell;
Figure 10 is a flowchart of a method for determining a PH value corresponding to the embodiment of Fig. 6;
Figure 11 is a flowchart of a method for reporting a PH value of Embodiment 3 of the present disclosure;
Figure 12 is a schematic diagram of a structure of a PH MAC CE when the uplink in the embodiment of Fig. 11 has only one carrier;
Figure 13 is a schematic diagram of a structure of the PH MAC CE when the uplink in the embodiment of Fig. 11 has at least one carrier and the D2D link is multiplexed in an uplink carrier of a primary cell;
Figure 14 is a schematic diagram of a structure of the PH MAC CE when the uplink in the embodiment of Fig. 11 has at least one carrier and the D2D link is multiplexed in an uplink carrier of a primary cell;
Figure 15 is a flowchart of a method for determining a PH value corresponding to the embodiment of Fig. 11;
Figure 16 is a flowchart of a method for reporting a PH value of Embodiment 5 of the present disclosure;
Figure 17 is a schematic diagram of a structure of a PH MAC CE when the uplink in the embodiment of Fig. 16 has only one carrier;
Figure 18 is a schematic diagram of a structure of the PH MAC CE when the uplink in the embodiment of Fig. 16 has at least one carrier and the D2D link is multiplexed in an uplink carrier of a primary cell;
Figure 19 is a schematic diagram of a structure of the PH MAC CE when the uplink in the embodiment of Fig. 16 has at least one carrier and the D2D link is multiplexed in an uplink carrier of a primary cell;
Figure 20 is a flowchart of a method for determining a PH value corresponding to the embodiment of Fig. 16;
Figure 21 is a schematic diagram of a structure of UE corresponding to the embodiment of Fig. 6;
Figure 22 is a schematic diagram of a structure of an eNB corresponding to the embodiment of Fig. 10;
Figure 23 is a schematic diagram of a structure of UE corresponding to the embodiment of Fig. 11;
Figure 24 is a schematic diagram of a structure of an eNB corresponding to the embodiment of Fig. 15;
Figure 25 is a schematic diagram of a structure of UE corresponding to the embodiment of Fig. 16; and
Figure 26 is a schematic diagram of a structure of an eNB corresponding to the embodiment of Fig. 20.

### Detailed Description

The foregoing and other features of the embodiments of the present disclosure will become apparent with reference to the accompanying drawings and the following description. There embodiments are illustrative only, and are not intended to limit the present disclosure. In order that the principle and embodiments of the present disclosure to be understood by those skilled in the art, the embodiments of the present disclosure shall be described taking that a D2D link is multiplexed with a cellular link in an uplink carrier of an LTE-A system as an example. However, it should be understood that the embodiments of the present disclosure are not limited to the above scenario, and are applicable to other scenarios related to PHR.

### Embodiment 1

An embodiment of the present disclosure provides a method for reporting power headroom. Fig. 6 is a flowchart of the method. Referring to Fig. 6, the method includes:
step 601: transmitting a power headroom report message by UE to an eNB when a report condition of PH is satisfied, related information in the power headroom report message which corresponds to a carrier multiplexed with a D2D link including a PH value of the D2D link and a PH value of a cellular link; wherein an order of the PH value of the D2D link and the PH value of the cellular link in the power headroom report message is predefined according to system configuration.

In this embodiment, the power headroom report message is a PH MAC CE. The PH MAC CE includes not only the PH value of the D2D link but also the PH value of the cellular link. A terminal (i.e. the UE) is permitted to simultaneously report the PH values of the D2D link and the cellular link multiplexed in the same carrier in one PH MAC CE. When the PHR is triggered, the terminal will report the PH value of the D2D link and the PH value of the cellular link in turn at a position to which this carrier corresponds.

In this embodiment and other embodiments, description is given mainly to the link type and indication manner, etc. of the PH value in the related information of the carrier of the D2D link being multiplexed in the power headroom report message. The existing standards may be referred to for other contents in the power headroom report message identical to the existing standards, which are incorporated herein, and shall not be described herein any further. That is to say, the power headroom report message includes the related information, such as the PH values of the carriers, and the present disclosure is mainly directed to the carrier multiplexed with the D2D link, and describes the link type and indication manner, etc. of the PH value in the related information of the carrier multiplexed with the D2D link. Hence, except otherwise specified, the description of the PH value of the D2D link and the PH value of the cellular link related to the embodiments of the present disclosure is based on this.

In this embodiment, positions of the above two PH values in the PH MAC CE are fixed, and their orders may be predetermined via system configuration. For example, in the PH MAC CE, the PH value of the D2D link occurs first, and then the PH value of the cellular link occurs, vice versa.

In an implementation of this embodiment, the uplink has only one carrier. In this implementation, the PH MAC CE may be configured as a structure shown in Fig. 7. As shown in Fig. 7, in this implementation, the system pre-configures that the PH value of the cellular link is located before the PH value of the D2D link, and when the UE transmits the PH MAC CE to the eNB, the PH MAC CE may be transmitted in the structure shown in Fig. 7. Of course, the structure of the PH MAC CE shown in Fig. 7 is only an example that the uplink has only one carrier. In other implementations where the uplink has only one carrier, the system may also provide that the PH value of the D2D link is located before the PH value of the cellular link.

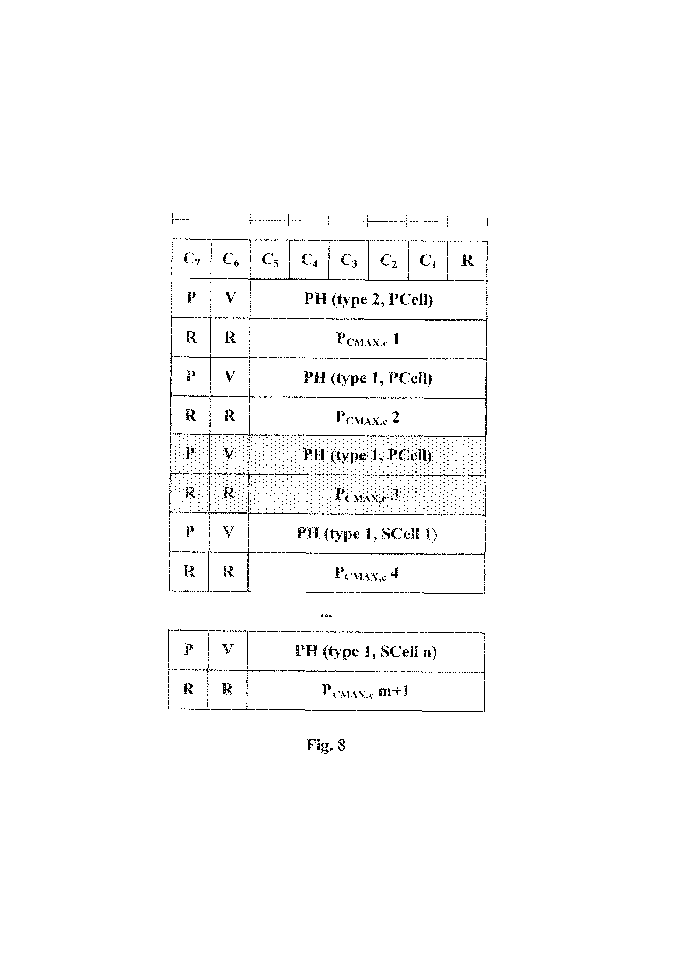

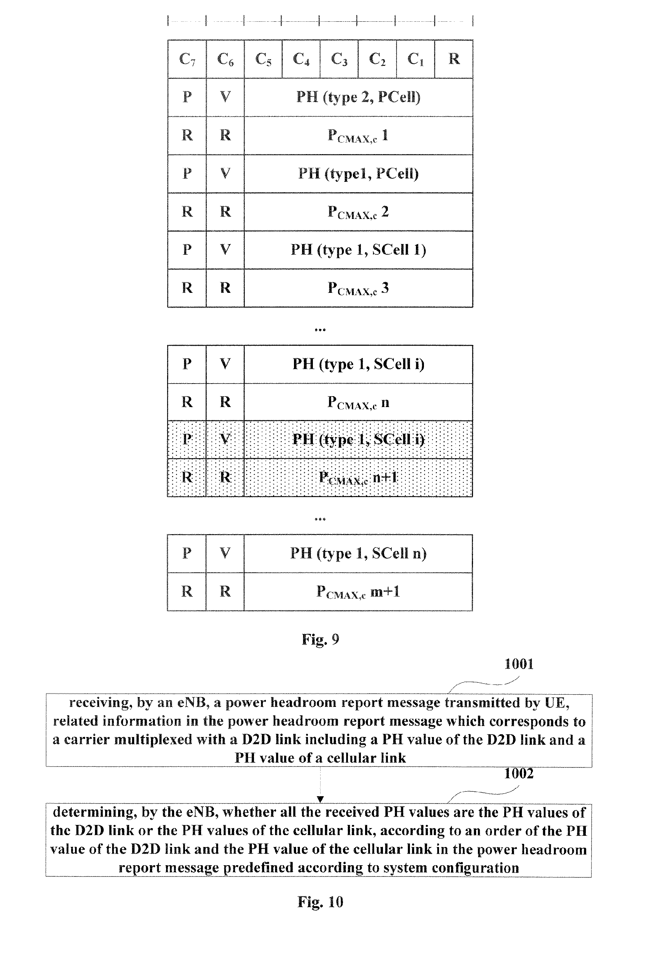

In another implementation of this embodiment, the uplink has at least one carrier. For example, the uplink has one carrier, or the uplink has multiple carriers. And in this implementation, if the D2D link is multiplexed in the carrier of the primary cell, the PH MAC CE may be configured as a structure shown in Fig. 8; and if the D2D link is multiplexed in the carrier of the secondary cell, the PH MAC CE may be configured as a structure shown in Fig. 9.

In this implementation, if the terminal has multiple D2D links, the multiple D2D links may be multiplexed in the uplink carriers of the primary cell and the secondary cell at the same time or may be multiplexed in the uplink carriers of multiple secondary cells at the same time. When the multiple D2D links are multiplexed in the uplink carriers of the primary cell and the secondary cell at the same time, the PH MAC CE may be configured as having the characteristics of Figs. 8 and 9 at the same time, that is, the respective PH values of the uplink carriers of the primary cell and the secondary cell where D2D links are multiplexed include not only the PH value of the D2D link but also the PH value of the cellular link, and their relative positions are fixed; and when multiple D2D links are multiplexed in uplink carriers of multiple secondary cells at the same time, the PH values to which the uplink carriers (of the secondary cell) multiplexed with D2D links correspond in the PH MAC CE include not only the PH value of the D2D link but also the PH value of the cellular link, and their relative positions are fixed.

As shown in Fig. 8, when the D2D link is multiplexed in the uplink carrier of the primary cell (PCell), according to the method of this embodiment, for the uplink carrier of the primary cell, the UE needs to report the PH value of the D2D link and the PH value of the cellular link to which it corresponds. If the system pre-configures that the PH value of the D2D link is located after the PH value of the cellular link of the primary cell, when the UE transmits the PH MAC CE to the eNB, the PH MAC CE may be transmitted in the structure shown in Fig. 8. Of course, the structure of the PH MAC CE shown in Fig. 8 is an example only, and the system may pre-configure that the PH value of the D2D link is located before the two types of PH values (type 1 and type 2, the same below) of the cellular link of the primary cell, and may also pre-configure that the PH value of the D2D link is located between the two types of PH values of the cellular link of the primary cell. In this embodiment, the system may configure either one of the relative positions of the PH values of the two types of links (the D2D link and the cellular link, the same below) in advance, only if such configuration is known to both the eNB and the terminal. In Fig. 8, the type of the PH value of the D2D link is type 1; however, this is an example only, and the type of the PH value of the D2D link may also be another type.

As shown in Fig. 9, when the D2D link is multiplexed in the uplink carrier of the secondary cell (SCell), according to the method of this embodiment, for the uplink carrier of the secondary cell, the UE needs to report the PH value of the cellular link to which it corresponds and the PH value of the D2D link. If the system pre-configures that PH value of the D2D link is located after the PH value of the cellular link of the secondary cell, when the UE transmits the PH MAC CE to the eNB, the PH MAC CE may be transmitted in the structure shown in Fig. 9. Of course, the structure of the PH MAC CE shown in Fig. 9 is an example only, and the system may pre-configure that the PH value of the D2D link is located before the PH value of the cellular link of the secondary cell. In this embodiment, the system may configure either one of the relative positions of the PH values of the two types of links in advance, only if such configuration is known to both the eNB and the terminal. In Fig. 9, the type of the PH value of the D2D link is type 1; however, this is an example only, and the type of the PH value of the D2D link may also be another type.

Alternatively, in the implementations shown in Figs. 8 and 9, maximum transmission power of the D2D link, such as P_{CMAX,c}3 shown in Fig. 8 or P_{CMAX,c}n+1 shown in Fig. 9, may also be reported at the same time, so that the eNB performs rational scheduling accordingly.

In this embodiment, an existing PHR triggering condition (i.e. a reporting condition of PH) may be followed; however, in order to better reflect a signal characteristic of the D2D link, a new triggering condition may be defined for the PHR. For example, the reporting condition of the PH may be defined as: when a prohibit PHR timer expires or has expired, the terminal has uplink resources for transmitting new data, and for any activated serving cell being multiplexed with D2D link, pathloss of D2D link thereof has changed and exceeds a predefined threshold value, the PHR is triggered; that is, the UE is triggered to transmit the above power headroom report message to the eNB.

With the method of this embodiment, the UE may accurately and/or punctually report power headroom of the D2D link to the eNB. Therefore, the eNB may schedule the resources of the D2D link and the cellular link more flexibly and effectively.

### Embodiment 2

An embodiment of the present disclosure further provides a method for determining power headroom. This method corresponds to the method for reporting power headroom of Embodiment 1, and in which when UE reports PH values to an eNB according to the method of Embodiment 1, the eNB determines according to the method of this embodiment which of the power headroom values reported by the UE and corresponding to an uplink carrier is a PH value of the D2D link, and which is/are PH value(s) of the cellular link.

Fig. 10 is a flowchart of the method of this embodiment. Referring to Fig. 10, the method includes:
step 1001: receiving, by an eNB, a power headroom report message transmitted by UE, related information in the power headroom report message which corresponds to a carrier multiplexed with a D2D link including a PH value of the D2D link and a PH value of a cellular link; and
step 1002: determining, by the eNB, whether all the received PH values are the PH values of the D2D link or the PH values of the cellular link, according to an order of the PH value of the D2D link and the PH value of the cellular link in the power headroom report message predefined according to system configuration.

In this embodiment, the power headroom report message is the PH MAC CE described in Embodiment 1.

In this embodiment, as the system configures an order of the PH value of the D2D link and the PH value of the cellular link in the PH MAC CE in advance, when the eNB receives the PH MAC CE, it may determine according to the system configuration which of the all the PH values in the PH MAC CE are the PH values of the D2D link and which are the PH values of the cellular link.

For example, taking the structure of the PH MAC CE shown in Fig. 7 as an example, when the eNB receives the PH MAC CE shown in Fig. 7, it may determine according to the system configuration that those PH values occurring first in the PH MAC CE are the PH values of the cellular link, and those PH values occurring later are the PH values of the D2D link.

For another example, taking the structure of the PH MAC CE shown in Fig. 8 as an example, when the eNB receives the PH MAC CE shown in Fig. 8, as it knows that the D2D link is multiplexed in the uplink carrier of the primary cell, it may determine according to the system configuration that in the PH values to which the uplink carrier of the primary cell corresponds, the PH values of the cellular link of the primary cell are in the front, and the PH values of the D2D link are in the back.

For a further example, taking the structure of the PH MAC CE shown in Fig. 9 as an example, when the eNB receives the PH MAC CE shown in Fig. 9, as it knows that the D2D link is multiplexed in an uplink carrier of a secondary cell, it may determine according to the system configuration that in the PH values to which the uplink carrier of the secondary cell corresponds, the PH values of the cellular link of the secondary cell are in the front, and the PH values of the D2D link are in the back.

When there are multiple D2D links multiplexed in uplink carriers of multiple cells, as the eNB knows the cells of which the uplink carriers being multiplexed with the D2D links, it may determine according to the system configuration that in the PH values to which the uplink carriers of these cells correspond, whether the PH values of the cellular link are in the front, or the PH values of the D2D link are in the front.

With the method of this embodiment, the UE may accurately and/or punctually report power headroom of the D2D link to the eNB. Therefore, the eNB may schedule the resources of the D2D link and the cellular link more flexibly and effectively.

### Embodiment 3

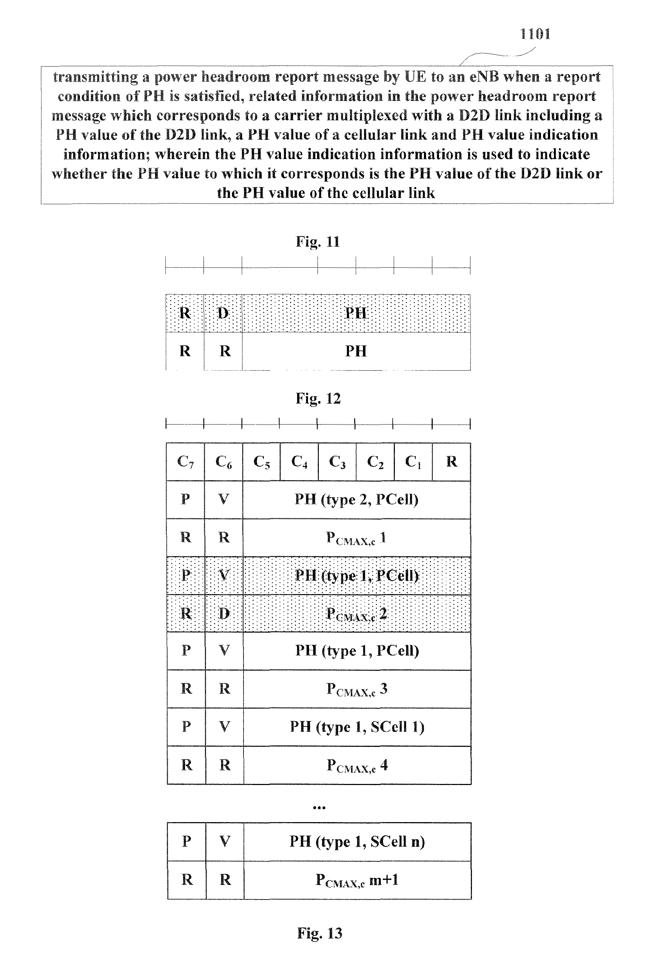

An embodiment of the present disclosure further provides a method for reporting power headroom. Fig. 11 is a flowchart of the method of this embodiment. Referring to Fig. 11, the method includes:
step 1101: transmitting a power headroom report message by UE to an eNB when a report condition of PH is satisfied, related information in the power headroom report message which corresponds to a carrier multiplexed with a D2D link including a PH value of the D2D link, a PH value of a cellular link and PH value indication information; wherein the PH value indication information is used to indicate whether the PH value to which it corresponds is the PH value of the D2D link or the PH value of the cellular link.

In this embodiment, the PH value indication information may be one, two or more, and this embodiment is not limited thereto. Furthermore, a value of the PH value indication information and a link type of a PH value indicated by the PH value indication information may be pre-configured by the system. For example, the system may pre-configure that the PH value indication information is denoted by "D", and D=1 is used to indicate that the PH value to which it corresponds is the PH value of the D2D link, and D=0 is used to indicate that the PH value to which it corresponds is the PH value of the cellular link.

In this embodiment, the power headroom report message is a PH MAC CE. The PH MAC CE includes not only the PH value of the D2D link but also the PH value of the cellular link. A terminal (i.e. the UE) is permitted to simultaneously report the PH values of the D2D link and the cellular link multiplexed in the same carrier in one PH MAC CE. When the PHR is triggered, the terminal will report the PH value of the D2D link and the PH value of the cellular link in turn at a position to which this carrier corresponds.

Different from Embodiment 1, in this embodiment, relative positions of the PH value of the D2D link and the PH value of the cellular link in the PH MAC CE are not fixed, but are flexibly configured by the system. In this embodiment, the system pre-configures one piece of indication information (referred to as PH value indication information) to indicate a link type of a PH value reported by it. For example, the indication information may be carried out by a reserved bit (R) in the PH MAC CE, and the reserved bit is used to indicate whether a PH value to which it corresponds is a PH value of a D2D link or a PH value of a cellular link. Hence, an order of the PH value of the D2D link and the PH value of the cellular link may be configured flexibly.

In an implementation of this embodiment, the uplink has only one carrier. In this implementation, the PH MAC CE may be configured as a structure shown in Fig. 12. As shown in Fig. 12, in this implementation, the PH MAC CE may also include two PH values, but in front of one of the PH values, a reserved bit is used to indicate a link type of the PH value (a PH value of a D2D link or a PH value of a cellular link). In the embodiment shown in Fig. 12, the system pre-configures that the reserved bit is used to indicate that the PH value to which it corresponds is a PH value of a D2D link, and denoted by "D". For example, when D=1, the PH value to which the PH value indication information "D" corresponds (i.e. the PH value in the first line in Fig. 12) is a PH value of a D2D link, and the other PH value (i.e. the PH value in the second line in Fig. 12) is a PH value of a cellular link; and when D=0, the PH value to which the PH value indication information "D" corresponds (i.e. the PH value in the first line in Fig. 12) is a PH value of a cellular link, and the other PH value (i.e. the PH value in the second line in Fig. 12) is a PH value of a D2D link. Of course, the structure of the PH MAC CE shown in Fig. 12 is just an example that the uplink has only one carrier. In other implementations where the uplink has only one carrier, other reserved bits may be configured to indicate a link type of a corresponding PH value.

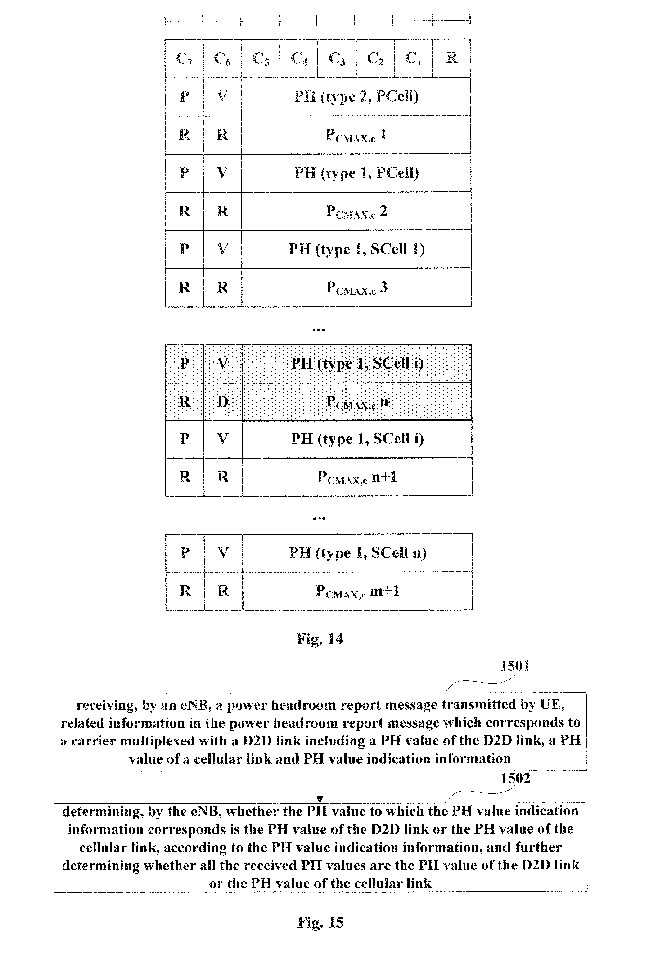

In another implementation of this embodiment, the uplink has at least one carrier; for example, the uplink has one carrier, or the uplink has multiple carriers. And in this implementation, if the D2D link is multiplexed in an uplink carrier of a primary cell, the PH MAC CE may be configured as a structure shown in Fig. 13; and if the D2D link is multiplexed in an uplink carrier of a secondary cell, the PH MAC CE may be configured as a structure shown in Fig. 14.

As shown in Fig. 13, when the D2D link is multiplexed in the uplink carrier of the primary cell (PCell), the system may pre-configure one piece of PH value indication information "D" to indicate a link type of the PH value to which it corresponds. And if the system pre-configures the PH value indication information "D" to indicate that a PH value to which it corresponds is a PH value of a D2D link, when the UE transmits the PH MAC CE to the eNB, the PH MAC CE may be transmitted in the structure shown in Fig. 13. In this example, in the PH values to which the uplink carriers of the primary cell correspond, an intermediate PH value is indicated by the PH value indication information "D" (for example, D=1), thus, it may be determined that the intermediate PH value is a PH value of a D2D link. Of course, the structure of the PH MAC CE shown in Fig. 13 is an example only, a position of the PH value of the D2D link in the PH MAC CE is not limited in this embodiment, and the UE may also pre-configure another reserved bit to indicate a link type of a PH value to which the reserved bit corresponds; and at the same time, the PH value indication information is not limited to use a symbol "D", and is not limited to indicate only the PH value of the D2D link. For example, it may also indicate a PH value of another link by another symbol. At the same time, in Fig. 13, the PH value of the D2D link is of type 1; however, this is an example only, and the PH value of the D2D link may also be of other types.

As shown in Fig. 14, when the D2D link is multiplexed in the uplink carrier of the secondary cell (SCell), the system may pre-configure one piece of PH value indication information "D" to indicate a link type of the PH value to which it corresponds. And if the system pre-configures the PH value indication information "D" to indicate that a PH value to which it corresponds is a PH value of a D2D link, when the UE transmits the PH MAC CE to the eNB, the PH MAC CE may be transmitted in the structure shown in Fig. 14. In this example, in the PH values to which the uplink carriers of the secondary cell correspond, a former PH value is indicated by the PH value indication information "D" (for example, D=1), thus, it may be determined that the former PH value is a PH value of a D2D link, and a latter PH value is a PH value of a cellular link of the secondary cell. Of course, the structure of the PH MAC CE shown in Fig. 14 is an example only, and the UE may also pre-configure another reserved bit to indicate a link type of a PH value to which the reserved bit corresponds; and at the same time, the PH value indication information is not limited to use a symbol "D", and is not limited to indicate only the PH value of the D2D link. For example, it may also indicate a PH value of another link by another symbol. At the same time, in Fig. 14, the PH value of the D2D link is of type 1; however, this is an example only, and the PH value of the D2D link may also be of other types.

When there are multiple D2D links multiplexed in uplink carriers of multiple cells, as the eNB knows the cells of which the uplink carriers being multiplexed with the D2D links, it may judge according to the PH value indication information "D" to which each uplink carrier multiplexed with a D2D link corresponds whether the PH value to which the PH value indication information "D" corresponds is a PH value of a D2D link or a PH value of a cellular link.

Alternatively, in the implementations shown in Figs. 13 and 14, maximum transmission power of the D2D link, such as P_{CMAX,c}2 shown in Fig. 13 or P_{CMAX,c}n shown in Fig. 14, may also be reported at the same time, so that the eNB performs rational scheduling accordingly.

In this embodiment, a reporting condition of PH is identical to that of Embodiment 1, and an existing PHR triggering condition (i.e. a reporting condition of PH) may be followed; however, in order to better reflect a signal characteristic of the D2D link, a new triggering condition may be defined for the PHR. For example, the reporting condition of PH may be defined as: when a prohibit PHR timer expires or has expired, the terminal has uplink resources for transmitting new data, and for any activated serving cell being multiplexed with D2D link, pathloss of D2D link thereof has changed and exceeds a predefined threshold value, the PHR is triggered; that is, the UE is triggered to transmit the above power headroom report message to the eNB.

With the method of this embodiment, the UE may accurately and/or punctually report power headroom of the D2D link to the eNB. Therefore, the eNB may schedule the resources of the D2D link and the cellular link more flexibly and effectively.

### Embodiment 4

An embodiment of the present disclosure further provides a method for determining power headroom. This method corresponds to the method for reporting power headroom of Embodiment 3, and in which when UE reports PH values to an eNB according to the method of Embodiment 3, the eNB determines according to the method of this embodiment which of the power headroom values reported by the UE and corresponding to an uplink carrier is a PH value of the D2D link, and which is/are PH value(s) of the cellular link.

Fig. 15 is a flowchart of the method of this embodiment. Referring to Fig. 15, the method includes:
step 1501: receiving, by an eNB, a power headroom report message transmitted by UE, related information in the power headroom report message which corresponds to a carrier multiplexed with a D2D link including a PH value of the D2D link, a PH value of a cellular link and PH value indication information; and
step 1502: determining, by the eNB, whether the PH value to which the PH value indication information corresponds is the PH value of the D2D link or the PH value of the cellular link, according to the PH value indication information, and further determining whether all the received PH values are the PH value of the D2D link or the PH value of the cellular link.

In this embodiment, the PH value indication information may be one, two or more, and this embodiment is not limited thereto.

In this embodiment, the power headroom report message is the PH MAC CE as described in Embodiment 3.

In this embodiment, as the system configures the PH value indication information and the link type of the PH value to which it corresponds and indicated by it in advance, when the eNB receives the PH MAC CE, it may determine the link type of the PH value to which the PH value indication information corresponds according to the PH value indication information, and hence determine which of the all the PH values in the received PH MAC CE are the PH values of the D2D link and which are the PH values of the cellular link.

For example, taking the structure of the PH MAC CE shown in Fig. 12 as an example, when the eNB receives the PH MAC CE shown in Fig. 12, it may determine according to the PH value indication information "D" (for example, D=1) in the PH MAC CE that the PH values to which the PH value indication information "D" in the PH MAC CE corresponds are the PH values of the D2D link, and other PH values in the PH MAC CE are the PH values of the D2D cellular link.

For another example, taking the structure of the PH MAC CE shown in Fig. 13 as an example, when the eNB receives the PH MAC CE shown in Fig. 13, as it knows that the D2D link is multiplexed in an uplink carrier of a primary cell of the cellular link, it may determine according to the PH value indication information "D" (for example, D=1) in the PH MAC CE that in the PH values to which the uplink carrier of the primary cell corresponds, the PH value to which the PH value indication information "D" corresponds is the PH value of the D2D link, and other PH values in the PH values to which the uplink carrier of the primary cell corresponds are the PH values of the cellular link.

For a further example, taking the structure of the PH MAC CE shown in Fig. 14 as an example, when the eNB receives the PH MAC CE shown in Fig. 14, as it knows that the D2D link is multiplexed in an uplink carrier of a secondary cell of the cellular link, it may determine according to the PH value indication information "D" (for example, D=1) in the PH MAC CE that in the PH values to which the uplink carrier of the secondary cell corresponds, the PH value to which the PH value indication information "D" corresponds is the PH value of the D2D link, and other PH values in the PH values to which the uplink carrier of the secondary cell corresponds are the PH values of the cellular link.

When there are multiple D2D links multiplexed in uplink carriers of multiple cells, as the eNB knows the cells of which the uplink carriers being multiplexed with the D2D links, it may judge according to the PH value indication information "D" to which each uplink carrier multiplexed with a D2D link corresponds whether the PH value to which the PH value indication information "D" corresponds is a PH value of a D2D link or a PH value of a cellular link.

With the method of this embodiment, the UE may accurately and/or punctually report power headroom of the D2D link to the eNB. Therefore, the eNB may schedule the resources of the D2D link and the cellular link more flexibly and effectively.

### Embodiment 5

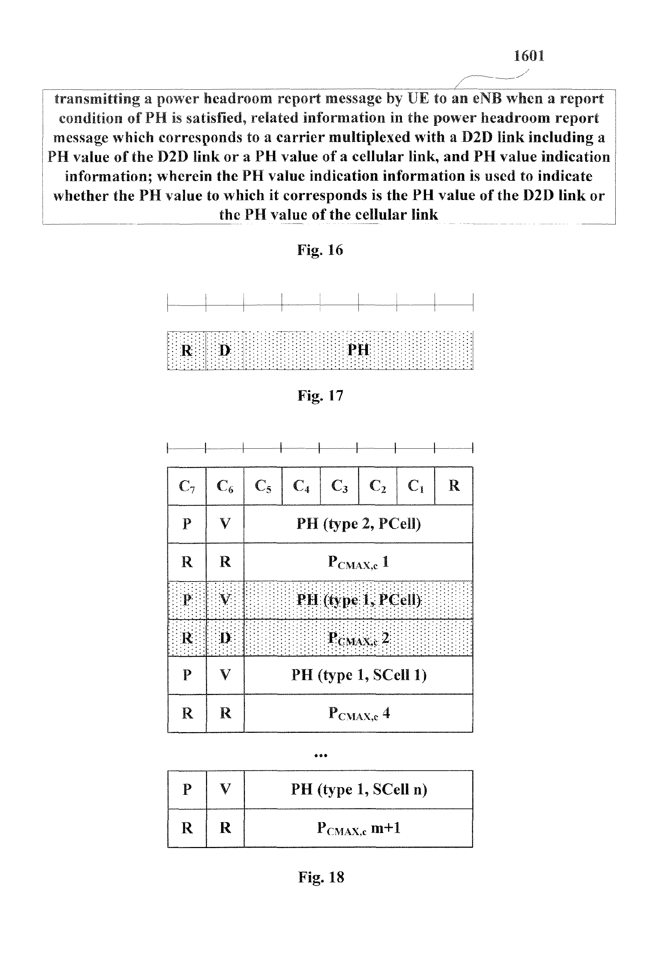

An embodiment of the present disclosure further provides a method for reporting power headroom. Fig. 16 is a flowchart of the method of this embodiment. Referring to Fig. 16, the method includes:
step 1601: transmitting a power headroom report message by UE to an eNB when a report condition of PH is satisfied, related information in the power headroom report message which corresponds to a carrier multiplexed with a D2D link including a PH value of the D2D link or a PH value of a cellular link, and PH value indication information; wherein the PH value indication information is used to indicate whether the PH value to which it corresponds is the PH value of the D2D link or the PH value of the cellular link.

In this embodiment, the power headroom report message is a PH MAC CE. And a terminal is only permitted to report a PH value of one link multiplexed in the same carrier in one PH MAC CE, that is, it is either a PH value of a D2D link or a PH value of a cellular link.

In this embodiment, the system configures one piece of PH value indication information in advance to indicate a link type of the PH value to which it corresponds. When the PHR is triggered, the terminal may use the pre-configured indication information (referred to as PH value indication information) to indicate a link type of the PH value. For example, a reserved bit in the current PH MAC CE is used to indicate whether a corresponding PH value is a PH value of a D2D link or a PH value of a cellular link. In this way, the eNB may definitely know a link type to which a received PH value corresponds.

In an implementation of this embodiment, the uplink has only one carrier. In this implementation, the PH MAC CE may be configured as a structure shown in Fig. 17. As shown in Fig. 17, in this implementation, the PH MAC CE includes only one PH value, but PH value indication information "D" is used to indicate a link type of the PH value. In this implementation, as described above, the PH value indication information "D" is pre-configured by the system. When the uplink has only one carrier, the UE may transmit the PH MAC CE to the eNB in the structure shown in Fig. 17. Of course, the structure of the PH MAC CE shown in Fig. 17 is only an example that the uplink has only one carrier. In other implementations where the uplink has only one carrier, the system may also pre-configure another reserved bit to indicate a link type of the PH value to which the reserved bit corresponds.

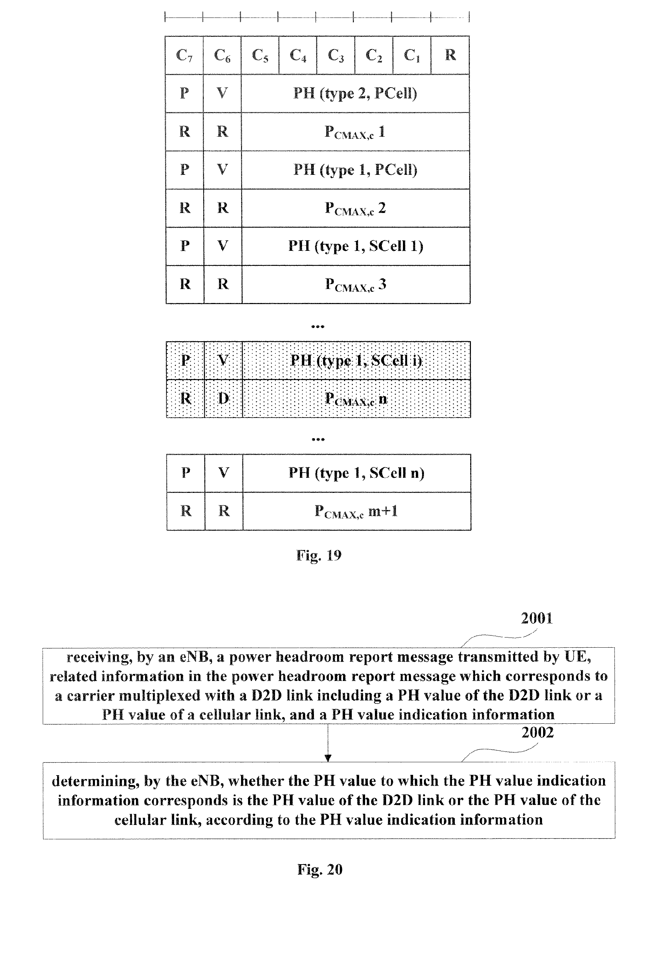

In another implementation of this embodiment, the uplink has at least one carrier. For example, the uplink has one carrier, or the uplink has multiple carriers. And in this implementation, if the D2D link is multiplexed in the carrier of the primary cell, the PH MAC CE may be configured as a structure shown in Fig. 18; and if the D2D link is multiplexed in the carrier of the secondary cell, the PH MAC CE may be configured as a structure shown in Fig. 19.

As shown in Fig. 18, when the D2D link is multiplexed in the uplink carrier of the primary cell (PCell), the PH value indication information "D" is used to indicate a link type of the reported PH value, such as a PH value of a D2D link or a PH value of a cellular link of the PCell. The PH value of the cellular link of the PCell in Fig. 18 has two types: type 1 or type 2. And whether a certain type of PH value is included is set by a high layer, and the relevant art may be referred to, which shall not be described herein any further. In this embodiment, the PH value indication information "D" may be used to indicate a link type of the reported PH value. When the UE transmits the PH MAC CE to the eNB, the PH MAC CE may be transmitted in the structure shown in Fig. 18. Of course, the structure of the PH MAC CE shown in Fig. 18 is an example only, and the system may pre-configure another reserved bit to indicate a link type of the reported PH value. And at the same time, the PH value indication information in Fig. 18 is only used to indicate a link type of a PH value of type 1, and the system may indicate a link type of a PH value of another type by using the PH value indication information.

As shown in Fig. 19, when the D2D link is multiplexed in the uplink carrier of the secondary cell (SCell), the PH value indication information "D" is used to indicate a link type of the reported PH value, such as a PH value of a D2D link or a PH value of a cellular link of the SCell. When the UE transmits the PH MAC CE to the eNB, the PH MAC CE may be transmitted in the structure shown in Fig. 19. Of course, the structure of the PH MAC CE shown in Fig. 19 is an example only, and the system may pre-configure another reserved bit to indicate a link type of the reported PH value. And at the same time, the PH value indication information in Fig. 19 is only used to indicate a link type of a PH value of type 1, and the system may indicate a link type of a PH value of another type by using the PH value indication information.

When there are multiple D2D links multiplexed in uplink carriers of multiple cells, as the eNB knows the cells of which the uplink carriers being multiplexed with the D2D links, it may judge according to the PH value indication information "D" to which each uplink carrier multiplexed with a D2D link corresponds whether the PH value to which the PH value indication information "D" corresponds is a PH value of a D2D link or a PH value of a cellular link.

Alternatively, in the implementations shown in Figs. 18 and 19, if the reported PH is PH of a D2D link, maximum transmission power of the D2D link, such as P_{CMAX,c}2 shown in Fig. 18 or P_{CMAX,c}n shown in Fig. 19, may also be reported at the same time, so that the eNB performs rational scheduling accordingly.

In this embodiment, a reporting condition of PH is identical to those of Embodiment 1 and Embodiment 3, and an existing PHR triggering condition (i.e. a reporting condition of PH) may be followed; however, in order to better reflect a signal characteristic of the D2D link, a new triggering condition may be defined for the PHR. For example, the reporting condition of PH may be defined as: when a prohibit PHR timer expires or has expired, the terminal has uplink resources for transmitting new data, and for any activated serving cell being multiplexed with D2D link, pathloss of D2D link thereof has changed and exceeds a predefined threshold value, the PHR is triggered; that is, the UE is triggered to transmit the above power headroom report message to the eNB.

With the method of this embodiment, the UE may accurately and/or punctually report power headroom of the D2D link to the eNB. Therefore, the eNB may schedule the resources of the D2D link and the cellular link more flexibly and effectively.

### Embodiment 6

An embodiment of the present disclosure further provides a method for determining power headroom. This method corresponds to the method for reporting power headroom of Embodiment 5, and in which when UE reports PH values to an eNB according to the method of Embodiment 5, the eNB determines a link type of a power headroom value reported by the UE according to the method of this embodiment.

Fig. 20 is a flowchart of the method of this embodiment. Referring to Fig. 20, the method includes:
step 2001: receiving, by an eNB, a power headroom report message transmitted by UE, related information in the power headroom report message which corresponds to a carrier multiplexed with a D2D link including a PH value of the D2D link or a PH value of a cellular link, and a PH value indication information; and
step 2002: determining, by the eNB, whether the PH value to which the PH value indication information corresponds is the PH value of the D2D link or the PH value of the cellular link, according to the PH value indication information.

In this embodiment, the power headroom report message is the PH MAC CE as described in Embodiment 5.

In this embodiment, as the system configures the PH value indication information used for indicating a link type of the reported PH value in advance, when the eNB receives the PH MAC CE, it may determine the link type of the PH value to which the PH value indication information corresponds according to the PH value indication information.

For example, taking the structure of the PH MAC CE shown in Fig. 17 as an example, when the eNB receives the PH MAC CE shown in Fig. 17, it may determine a link type of the PH value reported by the UE according to the PH value indication information "D" in the PH MAC CE.

For another example, taking the structure of the PH MAC CE shown in Fig. 18 as an example, when the eNB receives the PH MAC CE shown in Fig. 18, it may determine a link type of the PH value of type 1 to which the uplink carrier of the primary cell (PCell) corresponds according to the PH value indication information "D" in the PH MAC CE.

For a further example, taking the structure of the PH MAC CE shown in Fig. 19 as an example, when the eNB receives the PH MAC CE shown in Fig. 19, it may determine a link type of the PH value of type 1 to which the uplink carrier of the secondary cell (SCell) corresponds according to the PH value indication information "D" in the PH MAC CE.

When there are multiple D2D links multiplexed in uplink carriers of multiple cells, as the eNB knows the cells of which the uplink carriers being multiplexed with the D2D links, it may judge according to the PH value indication information "D" to which each uplink carrier multiplexed with a D2D link corresponds whether the PH value to which the PH value indication information "D" corresponds is a PH value of a D2D link or a PH value of a cellular link.

With the method of this embodiment, the UE may accurately and/or punctually report power headroom of the D2D link to the eNB. Therefore, the eNB may schedule the resources of the D2D link and the cellular link more flexibly and effectively.

An embodiment of the present disclosure further provides UE, as described in Embodiment 7 below. As the principle of the UE for solving problems is similar to that of the method of Embodiment 1, the implementation of the method of Embodiment 1 may be referred to for the implementation of the UE, and the repeated parts shall not be described herein any further.

### Embodiment 7

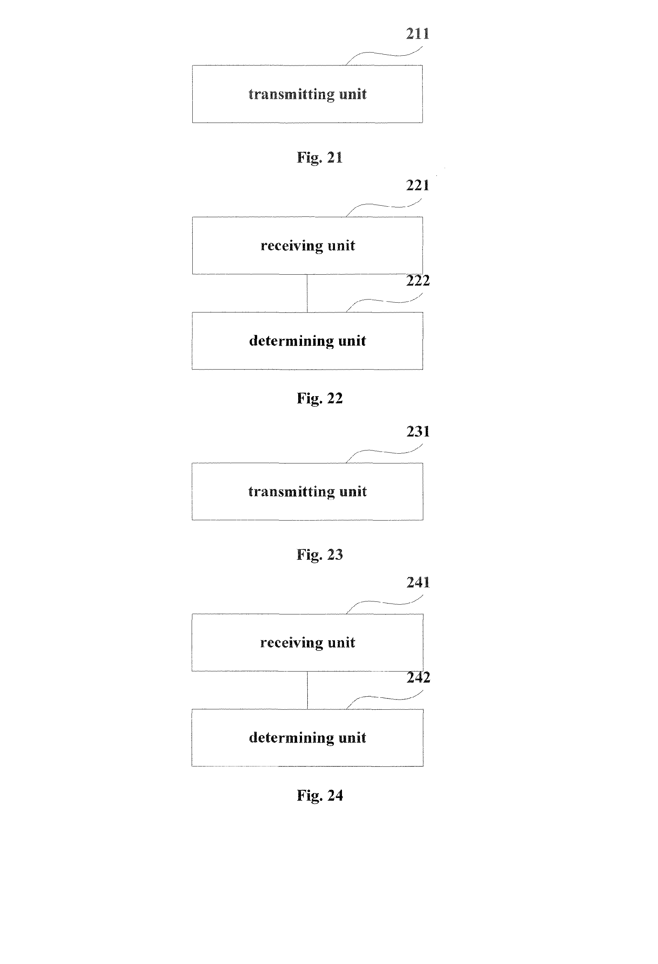

An embodiment of the present disclosure provides UE. Fig. 21 is a schematic diagram of a structure of the UE. Referring to Fig. 21, the UE includes:
a transmitting unit 211 configured to transmit a power headroom report message to an eNB when a report condition of PH is satisfied, related information in the power headroom report message which corresponds to a carrier multiplexed with a D2D link including a PH value of the D2D link and a PH value of a cellular link; wherein an order of the PH value of the D2D link and the PH value of the cellular link in the power headroom report message is predefined according to system configuration.

In this embodiment, the power headroom report message is a PH MAC CE.

In this embodiment, the report condition of PH is that:
a prohibit PHR timer expires or has expired, the UE has uplink resources for transmitting new data, and for any activated serving cell being multiplexed by D2D link, pathloss of D2D link thereof has changed and exceeds a predefined threshold value.

With the UE of this embodiment, power headroom of the D2D link may be accurately and/or punctually reported to the eNB. Therefore, the eNB may schedule the resources of the D2D link and the cellular link more flexibly and effectively.

An embodiment of the present disclosure further provides an eNB, as described in Embodiment 8 below. As the principle of the eNB for solving problems is similar to that of the method of Embodiment 2, the implementation of the method of Embodiment 2 may be referred to for the implementation of the eNB, and the repeated parts shall not be described herein any further.

### Embodiment 8

An embodiment of the present disclosure provides an eNB. Fig. 22 is a schematic diagram of a structure of the eNB. Referring to Fig. 22, the eNB includes:
a receiving unit 221 configured to receive a power headroom report message transmitted by UE, related information in the power headroom report message which corresponds to a carrier multiplexed with a D2D link including a PH value of the D2D link and a PH value of a cellular link; and
a determining unit 222 configured to determine whether all the received PH values are PH values of a D2D link or PH values of a cellular link, according to an order of a PH value of a D2D link and a PH value of a cellular link in the power headroom report message predefined according to system configuration.

In this embodiment, the power headroom report message is a PH MAC CE.

With the eNB of this embodiment, the resources of the D2D link and the cellular link may be scheduled more flexibly and efficiently.

An embodiment of the present disclosure further provides UE, as described in Embodiment 9 below. As the principle of the UE for solving problems is similar to that of the method of Embodiment 3, the implementation of the method of Embodiment 3 may be referred to for the implementation of the UE, and the repeated parts shall not be described herein any further.

### Embodiment 9

An embodiment of the present disclosure provides UE. Fig. 23 is a schematic diagram of a structure of the UE. Referring to Fig. 23, the UE includes:
a transmitting unit 231 configured to transmit a power headroom report message to an eNB when a report condition of PH is satisfied, related information in the power headroom report message which corresponds to a carrier multiplexed with a D2D link including a PH value of the D2D link, a PH value of a cellular link and PH value indication information, wherein the PH value indication information is used to indicate whether the PH value to which it corresponds is a PH value of a D2D link or a PH value of a cellular link.

In this embodiment, the power headroom report message is a PH MAC CE.

In this embodiment, the report condition of PH is that:
a prohibit PHR timer expires or has expired, the UE has uplink resources for transmitting new data, and for any activated serving cell being multiplexing with D2D link, pathloss of its D2D link has changed and exceeds a predefined threshold value.

With the UE of this embodiment, power headroom of the D2D link may be accurately and/or punctually reported to the eNB. Therefore, the eNB may schedule the resources of the D2D link and the cellular link more flexibly and effectively.

An embodiment of the present disclosure further provides an eNB, as described in Embodiment 10 below. As the principle of the eNB for solving problems is similar to that of the method of Embodiment 4, the implementation of the method of Embodiment 4 may be referred to for the implementation of the eNB, and the repeated parts shall not be described herein any further.

### Embodiment 10

An embodiment of the present disclosure provides an eNB. Fig. 24 is a schematic diagram of a structure of the eNB. Referring to Fig. 24, the eNB includes:
a receiving unit 241 configured to receive a power headroom report message transmitted by UE, related information in the power headroom report message which corresponds to a carrier multiplexed with a D2D link including a PH value of the D2D link, a PH value of a cellular link and PH value indication information; and
a determining unit 242 configured to determine whether the PH value to which the PH value indication information corresponds is a PH value of a D2D link or a PH value of a cellular link, according to the PH value indication information, and further determine whether all the received PH values are PH values of a D2D link or PH values of a cellular link.

In this embodiment, the power headroom report message is a PH MAC CE.

With the eNB of this embodiment, the resources of the D2D link and the cellular link may be scheduled more flexibly and efficiently.

An embodiment of the present disclosure further provides UE, as described in Embodiment 11 below. As the principle of the UE for solving problems is similar to that of the method of Embodiment 5, the implementation of the method of Embodiment 5 may be referred to for the implementation of the UE, and the repeated parts shall not be described herein any further.

### Embodiment 11

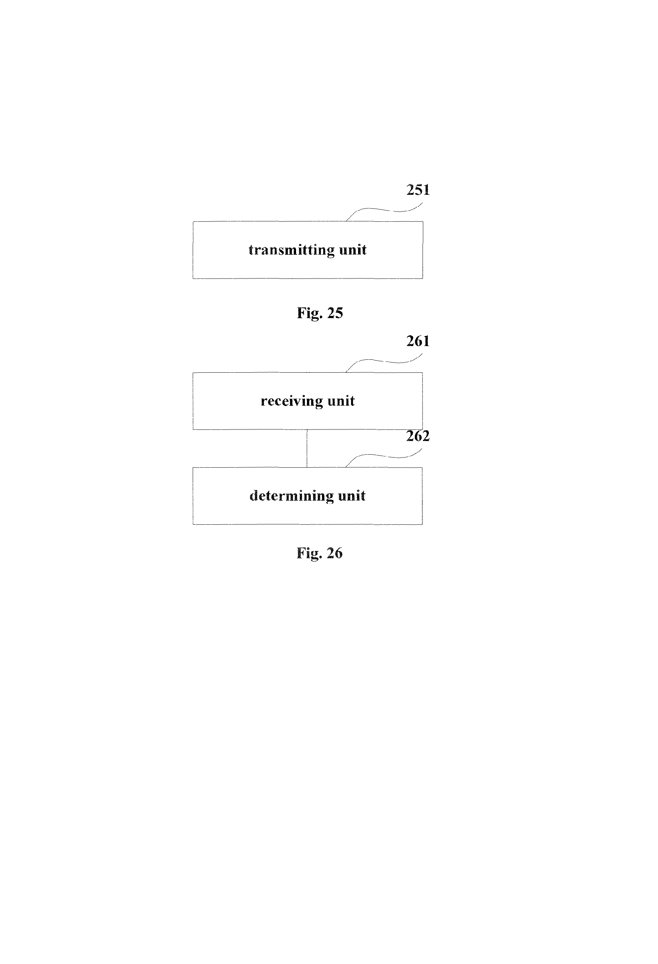

An embodiment of the present disclosure provides UE. Fig. 25 is a schematic diagram of a structure of the UE. Referring to Fig. 25, the UE includes:
a transmitting unit 251 configured to transmit a power headroom report message by UE to an eNB when a report condition of PH is satisfied, related information in the power headroom report message which corresponds to a carrier multiplexed with a D2D link including a PH value of the D2D link or a PH value of a cellular link, and PH value indication information, wherein the PH value indication information is used to indicate whether the PH value to which it corresponds is a PH value of a D2D link or a PH value of a cellular link.

In this embodiment, the power headroom report message is a PH MAC CE.

In this embodiment, the report condition of PH is that:
a prohibit PHR timer expires or has expired, the UE has uplink resources for transmitting new data, and for any activated serving cell being multiplexed with D2D link, pathloss of D2D link thereof has changed and exceeds a predefined threshold value.

With the UE of this embodiment, power headroom of the D2D link may be accurately and/or punctually reported to the eNB. Therefore, the eNB may schedule the resources of the D2D link and the cellular link more flexibly and effectively.

An embodiment of the present disclosure further provides an eNB, as described in Embodiment 12 below. As the principle of the eNB for solving problems is similar to that of the method of Embodiment 6, the implementation of the method of Embodiment 6 may be referred to for the implementation of the eNB, and the repeated parts shall not be described herein any further.

### Embodiment 12

An embodiment of the present disclosure provides an eNB. Fig. 26 is a schematic diagram of a structure of the eNB. Referring to Fig. 26, the eNB includes:
a receiving unit 261 configured to receive a power headroom report message transmitted by UE, related information in the power headroom report message which corresponds to a carrier multiplexed with a D2D link including a PH value of the D2D link or a PH value of a cellular link, and PH value indication information; and
a determining unit 262 configured to determine whether the PH value to which the PH value indication information corresponds is a PH value of a D2D link or a PH value of a cellular link, according to the PH value indication information.

In this embodiment, the power headroom report message is a PH MAC CE.

With the eNB of this embodiment, the resources of the D2D link and the cellular link may be scheduled more flexibly and efficiently.

An embodiment of the present disclosure further provides a communication system, including the UE as described in Embodiment 7 and the eNB as described in Embodiment 8, or including the UE as described in Embodiment 9 and the eNB as described in Embodiment 10, or including the UE as described in Embodiment 11 and the eNB as described in Embodiment 12.

An embodiment of the present disclosure further provides a computer-readable program, wherein when the program is executed in an eNB, the program enables a computer to carry out the method for determining power headroom as described in Embodiment 2, or 4 or 6 in the eNB.

An embodiment of the present disclosure further provides a storage medium in which a computer-readable program is stored, wherein the computer-readable program enables a computer to carry out the method for determining power headroom as described in Embodiment 2, or 4 or 6 in an eNB.

An embodiment of the present disclosure further provides a computer-readable program, wherein when the program is executed in terminal equipment, the program enables a computer to carry out the method for reporting power headroom as described in Embodiment 1, or 3 or 5 in the terminal equipment.

An embodiment of the present disclosure further provides a storage medium in which a computer-readable program is stored, wherein the computer-readable program enables a computer to carry out the method for reporting power headroom as described in Embodiment 1, or 3 or 5 in terminal equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A method for reporting power headroom (PH), comprising:
transmitting a power headroom report message by UE to an eNB when a report condition of PH is satisfied, related information in the power headroom report message which corresponds to a carrier multiplexed with a D2D link comprising a PH value of the D2D link and a PH value of a cellular link; wherein an order of the PH value of the D2D link and the PH value of the cellular link in the power headroom report message is predefined according to system configuration.

2. A method for reporting power headroom (PH), comprising:
transmitting a power headroom report message by UE to an eNB when a report condition of PH is satisfied, related information in the power headroom report message which corresponds to a carrier multiplexed with a D2D link comprising a PH value of the D2D link, a PH value of a cellular link and PH value indication information; wherein the PH value indication information is used to indicate whether the PH value to which it corresponds is the PH value of the D2D link or the PH value of the cellular link.

3. A method for reporting power headroom (PH), comprising:
transmitting a power headroom report message by UE to an eNB when a report condition of PH is satisfied, related information in the power headroom report message which corresponds to a carrier multiplexed with a D2D link comprising a PH value of the D2D link or a PH value of a cellular link, and PH value indication information; wherein the PH value indication information is used to indicate whether the PH value to which it corresponds is the PH value of the D2D link or the PH value of the cellular link.

4. The method according to any one of claims 1-3, wherein the power headroom report message is a PH MAC Control Element.

5. The method according to any one of claims 1-3, wherein the report condition of PH is that:
a prohibit PHR timer expires or has expired, the UE has uplink resources for transmitting new data, and for any activated serving cell being multiplexed with D2D link, pathloss of D2D link thereof has changed and exceeds a predefined threshold value.

6. A method for determining power headroom (PH), comprising:
receiving, by an eNB, a power headroom report message transmitted by UE, related information in the power headroom report message which corresponds to a carrier multiplexed with a D2D link comprising a PH value of the D2D link and a PH value of a cellular link; and
determining, by the eNB, whether all the received PH values are the PH value of the D2D link or the PH value of the cellular link, according to an order of the PH value of the D2D link and the PH value of the cellular link in the power headroom report message predefined according to system configuration.

7. A method for determining power headroom, comprising:
receiving, by an eNB, a power headroom report message transmitted by UE, related information in the power headroom report message which corresponds to a carrier multiplexed with a D2D link comprising a PH value of the D2D link, a PH value of a cellular link and PH value indication information; and
determining, by the eNB, whether the PH value to which the PH value indication information corresponds is the PH value of the D2D link or the PH value of the cellular link, according to the PH value indication information, and further determining whether all the received PH values are the PH value of the D2D link or the PH value of the cellular link.

8. A method for determining power headroom, comprising:
receiving, by an eNB, a power headroom report message transmitted by UE, related information in the power headroom report message which corresponds to a carrier multiplexed with a D2D link comprising a PH value of the D2D link or a PH value of a cellular link, and a PH value indication information; and
determining, by the eNB, whether the PH value to which the PH value indication information corresponds is the PH value of the D2D link or the PH value of the cellular link, according to the PH value indication information.

9. User equipment (UE), comprising:
a transmitting unit configured to transmit a power headroom report message to an eNB when a report condition of PH is satisfied, related information in the power headroom report message which corresponds to a carrier multiplexed with a D2D link comprising a PH value of the D2D link and a PH value of a cellular link; wherein an order of the PH value of the D2D link and the PH value of the cellular link in the power headroom report message is predefined according to system configuration.

10. User equipment (UE), comprising:
a transmitting unit configured to transmit a power headroom report message to an eNB when a report condition of PH is satisfied, related information in the power headroom report message which corresponds to a carrier multiplexed with a D2D link comprising a PH value of the D2D link, a PH value of a cellular link and PH value indication information, wherein the PH value indication information is used to indicate whether the PH value to which it corresponds is the PH value of the D2D link or the PH value of the cellular link.

11. User equipment (UE), comprising:
a transmitting unit configured to transmit a power headroom report message to an eNB when a report condition of PH is satisfied, related information in the power headroom report message which corresponds to a carrier multiplexed with a D2D link comprising a PH value of the D2D link or a PH value of a cellular link, and PH value indication information, wherein the PH value indication information is used to indicate whether the PH value to which it corresponds is the PH value of the D2D link or the PH value of the cellular link.

12. The UE according to any one of claims 9-11, wherein the power headroom report message is a PH MAC Control Element.

13. The UE according to any one of claims 9-11, wherein the report condition of PH is that:
a prohibit PHR timer expires or has expired, the UE has uplink resources for transmitting new data, and for any activated serving cell being multiplexed with D2D link, pathloss of D2D link thereof has changed and exceeds a predefined threshold value.

14. An eNB, comprising:
a receiving unit configured to receive a power headroom report message transmitted by UE, related information in the power headroom report message which corresponds to a carrier multiplexed with a D2D link comprising a PH value of the D2D link and a PH value of a cellular link; and
a determining unit configured to determine whether all the received PH values are the PH value of the D2D link or the PH value of the cellular link, according to an order of the PH value of the D2D link and the PH value of the cellular link in the power headroom report message predefined according to system configuration.

15. An eNB, comprising:
a receiving unit configured to receive a power headroom report message transmitted by UE, related information in the power headroom report message which corresponds to a carrier multiplexed with a D2D link comprising a PH value of the D2D link, a PH value of a cellular link and PH value indication information; and
a determining unit configured to determine whether the PH value to which the PH value indication information corresponds is the PH value of the D2D link or the PH value of the cellular link, according to the PH value indication information, and further determine whether all the received PH values are the PH value of the D2D link or the PH value of the cellular link.

16. An eNB, comprising:
a receiving unit configured to receive a power headroom report message transmitted by UE, related information in the power headroom report message which corresponds to a carrier multiplexed with a D2D link comprising a PH value of the D2D link or a PH value of a cellular link, and PH value indication information; and
a determining unit configured to determine whether the PH value to which the PH value indication information corresponds is the PH value of the D2D link or the PH value of the cellular link, according to the PH value indication information.

17. A communication system, comprising the UE as claimed in any one of claims 9 and 12-13 and the eNB as claimed in claim 14, or comprising the UE as claimed in any one of claims 10 and 12-13 and the eNB as claimed in claim 15, or comprising the UE as claimed in any one of claims 11-13 and the eNB as claimed in claim 16.

18. A computer-readable program, wherein when the program is executed in an eNB, the program enables a computer to carry out the method for determining power headroom as claimed in any one of claims 6-8 in the eNB.

19. A storage medium in which a computer-readable program is stored, wherein the computer-readable program enables a computer to carry out the method for determining power headroom as claimed in any one of claims 6-8 in an eNB.

20. A computer-readable program, wherein when the program is executed in terminal equipment, the program enables a computer to carry out the method for reporting power headroom as claimed in any one of claims 1-5 in the terminal equipment.

21. A storage medium in which a computer-readable program is stored, wherein the computer-readable program enables a computer to carry out the method for reporting power headroom as claimed in any one of claims 1-5 in terminal equipment.
